# FASCICULE DE BREVET EUROPEEN

(11) **EP 2 911 776 B1**
(45) Date de publication et mention de la délivrance du brevet: **05.08.2020**
(21) Numéro de dépôt: 13795832.8
(22) Date de dépôt: 28.10.2013
(51) Int. Cl.: B01J 8/00

(54) **GESTION DU CHARGEMENT EN PARTICULES SOLIDES D'UN REACTEUR**
VERWALTUNG DES LADENS EINES REAKTORS MIT FESTEN TEILCHEN
MANAGEMENT OF THE CHARGING OF A REACTOR WITH SOLID PARTICLES

(30) Priorité: 29.10.2012 FR 1260313
(43) Date de publication de la demande: 02.09.2015
(73) Titulaire: TOTAL RAFFINAGE CHIMIE, 92400 Courbevoie (FR)
(72) Inventeur: MAIRESSE, Julien, F-33190 La Reole (FR); LEROY, Pascal, F-76290 Montivilliers (FR)
(74) Mandataire: Fédit-Loriot
(86) Numéro de dépôt international: PCT/FR2013/052570
(87) Numéro de publication internationale: WO 2014/068232

(56) Documents cités:
- EP-A2- 0 727 250
- FR-A1- 2 872 497
- FR-A1- 2 954 302

## Description

L'invention concerne la gestion du chargement en particules solides d'une enceinte, et en particulier d'un réacteur.

Il est connu de charger des réacteurs, notamment de type chimique, électrochimique, pétrolier ou pétrochimique, avec des particules solides à l'état divisé. Ces particules peuvent par exemple se présenter sous forme de billes, de grains, de cylindres, de pastilles, de bâtonnets ou toute autre forme et ont en général des dimensions relativement faibles.

Les particules peuvent être en particulier des grains de catalyseur solides généralement extrudés réalisés soit sous forme régulière, soit sous forme de bâtonnets mono ou multilobes, dont les dimensions peuvent varier selon les cas de quelques dixièmes de millimètres à quelques centimètres.

C'est à cette application, dite « de chargement dense », de grains de catalyseur dans un réacteur chimique qu'on se référera plus particulièrement dans la suite de la présente description. Mais le dispositif décrit peut plus généralement trouver des applications dans le cadre d'un chargement de particules solides dans un réacteur ou une autre enceinte, notamment cylindrique.

Par « chargement dense », on entend un chargement par effet de pluie optimisé afin de permettre de charger dans un espace donné, en un minimum de temps, une quantité cible de particules solides de façon homogène et la plus uniforme possible.

Afin de mieux gérer le chargement de l'enceinte, notamment lorsqu'il doit être dense, il est connu de disposer une sonde à l'intérieur de l'enceinte afin d'obtenir des valeurs de mesure de la hauteur du lit de particules solides chargé.

Par exemple le document US 2008/0216918 (Comardo et al.) décrit un dispositif de distribution de particules solides, du type de celui concerné par l'invention, sur lequel sont montés une source laser et un détecteur en communication avec un ordinateur. L'ordinateur reçoit des signaux issus de ce détecteur et détermine par triangulation des valeurs de hauteur du lit catalytique. Un traitement est effectué afin d'éliminer le bruit lié à la poussière ou aux particules en train de tomber. Par exemple, des valeurs de mesure données ne sont acceptées que si elles concordent avec des valeurs de mesures ultérieures. Les valeurs de mesure conservées sont affichées sur l'écran d'un ordinateur. Cet ordinateur transmet en outre des signaux de commande du chargement au dispositif de distribution.

Egalement, le document EP0727250 (JEC) décrit un laser-scanneur fixé à une paroi latérale et une caméra pour détecter la lumière réfléchie. La surface du lit est divisée en petits carrés, et chaque carré est scanné l'un après autre. Un ordinateur calcule des valeurs de hauteur de lit par trigonométrie. Un traitement d'image permet de traiter le volume des données reçues, d'obtenir une précision suffisante et de distinguer les particules en train de tomber des particules déposées.

Il existe un besoin pour une meilleure gestion de chargement dense.

Il est proposé un procédé de gestion du chargement en particules solides d'une enceinte, par exemple d'un réacteur, comprenant :
- stocker dans une mémoire une modélisation d'un profil de chargement attendu sur une durée de chargement,
- au cours du chargement, recevoir d'au moins un capteur des valeurs mesurées d'un paramètre représentatif de la hauteur d'un lit de particules solides chargées dans l'enceinte,
- déterminer des valeurs filtrées du paramètre représentatif de la hauteur à partir des valeurs mesurées reçues et à partir du profil de chargement modélisé, et
- transmettre ces valeurs filtrées à un moyen de pilotage du chargement en vue d'une élaboration en fonction de ces valeurs filtrées d'un signal de contrôle du chargement en particules solides.

Ainsi, en se basant sur une modélisation du profil de chargement attendu on peut obtenir des valeurs du paramètre représentatif de la hauteur plus fiables que dans l'art antérieur, dans lequel on se base uniquement sur des valeurs mesurées précédentes, ce qui peut permettre une meilleure gestion du chargement.

On modélise les variations attendues d'un paramètre représentatif de la hauteur de chargement, et on utilise cette modélisation pour modifier ou éliminer des valeurs mesurées, ce qui peut permettre par exemple d'éviter de baser le pilotage du chargement sur des valeurs erronées lorsque l'erreur introduite évolue lentement, comme cela serait le cas avec le procédé de l'art antérieur discuté plus haut.

L'invention n'est en rien limitée par la façon dont on prend en compte cette modélisation pour déterminer les valeurs filtrées du paramètre représentatif de la hauteur.

On peut par exemple prévoir de corriger ou éliminer les valeurs mesurées s'écartant trop des valeurs modélisées correspondantes.

La modélisation du profil de chargement attendu sur la durée de chargement peut par exemple comprendre des valeurs du paramètre représentatif de la hauteur et des valeurs d'un paramètre de temps, associées deux à deux, par exemple sous forme de tableau. On peut aussi prévoir de stocker simplement des valeurs permettant de caractériser une courbe dans un repère avec en abscisse le temps et en ordonnée le paramètre représentatif de la hauteur, par exemple un coefficient directeur de droite et les coordonnées d'un point de cette droite. En particulier, le procédé décrit ci-dessus peut permettre d'effectuer le chargement plus rapidement que dans l'art antérieur, ce qui peut être crucial notamment lorsque l'enceinte est un réacteur pétrochimique d'une raffinerie.

L'invention peut permettre un chargement dense d'un réacteur en particules solides de manière automatique ou quasi-automatique. En particulier, l'invention peut permettre d'éviter d'interrompre le chargement de manière intermittente pour vérifier manuellement la hauteur et le niveau du lit de particules.

Grâce à ce gain en fiabilité et en temps de chargement, l'indisponibilité de l'unité concernée peut être moins longue que dans l'art antérieur. L'invention peut ainsi trouver une application particulièrement intéressante dans une raffinerie car tout temps d'arrêt d'une unité représente un manque à gagner significatif.

On peut par exemple prévoir d'afficher, par exemple sur l'écran d'un ordinateur de contrôle, des valeurs courantes du paramètre représentatif de la hauteur, par exemple un profil de chargement mesuré, ou bien simplement des valeurs numériques de hauteur.

Le procédé peut ainsi comprendre une étape d'affichage des valeurs filtrées du paramètre représentatif de la hauteur.

Le procédé peut éventuellement comprendre une étape de traitement, effectuée par exemple par le moyen de pilotage, consistant à élaborer un signal de contrôle du chargement, en fonction des valeurs filtrées du paramètre représentatif de la hauteur. Par exemple on peut déterminer une valeur de débit souhaitée à partir des valeurs de hauteur filtrées afin de garantir une densité optimisée de chargement, et/ou un signal de contrôle des ouvertures du dispositif de chargement, et/ou autre.

L'invention n'est bien entendu pas limitée à la réalisation d'une commande automatique de l'ouverture du dispositif de distribution en particules. Le procédé peut par exemple se contenter d'un affichage des valeurs de hauteur filtrées, de sorte que c'est à l'opérateur de commander le débit de chargement en particules solides. Le moyen de pilotage peut alors comprendre l'écran, et l'élaboration du signal de contrôle peut être effectuée par un opérateur humain.

Par « signal », on entend aussi bien un signal électrique, par exemple numérique ou analogique, qu'un signal d'une autre nature. L'invention n'est en rien limitée par la nature des signaux utilisés.

L'invention n'est pas limitée par la nature du paramètre représentatif de la hauteur. Ce paramètre peut par exemple comprendre une hauteur du lit de particules solides chargé ou bien encore une distance entre un capteur et ce lit.

L'invention n'est pas non plus limitée par la façon dont le profil de chargement est modélisé. Par exemple, on pourra prévoir de modéliser :
- un profil de chargement théorique, en fonction de la forme de l'enceinte, du débit de particules solides, d'une valeur de densité attendue et/ou du type de particules solides chargées, et/ou
- un profil de chargement expérimental obtenu à partir de valeurs filtrées du paramètre représentatif de la hauteur déterminée à des instants précédents, et éventuellement de la forme de l'enceinte et/ou du débit de particules solides. La forme de l'enceinte et/ou le débit de particules solides peuvent servir à choisir un modèle de régression linéaire ou non. Dit autrement, à partir de la forme de l'enceinte et/ou du débit de particules solides, on fait l'hypothèse que tel ou tel type de fonction relie le paramètre représentatif de la hauteur et temps de chargement, par exemple une fonction polynômiale, ou autre.

Ainsi, pour une enceinte cylindrique (c'est-à-dire de section invariable avec la hauteur) et pour un débit constant, on peut s'attendre à ce que le profil de chargement ait une allure de droite. On pourra ainsi déterminer une droite théorique de chargement et/ou la droite de chargement la plus proche de valeurs filtrées précédentes. Dans ce dernier cas, on pourra par exemple avoir recours à une méthode de régression linéaire et/ou de type moindres carrés, ou autre. On détermine par exemple la droite de régression pour laquelle la somme des carrés des distances entre valeurs filtrées et valeurs correspondantes sur la droite est minimale. Dit autrement, on essaye de minimiser la somme quadratique des déviations des mesures aux prédictions.

Bien entendu, dans le cas d'un réacteur à section variant avec la hauteur et/ou à débit non constant, la fonction dont on fait l'hypothèse qu'elle relie hauteur à temps de chargement peut être plus complexe qu'une simple fonction polynômiale d'ordre 1. Il pourra par exemple s'agir d'une fonction polynômiale d'ordre 2, 3, ou davantage, et/ou à dérivée non continue, définie de façon différente d'un intervalle de temps à l'autre (fonction droite par morceaux par exemple).

On pourra prévoir de déterminer les valeurs filtrées en comparant des valeurs mesurées à des valeurs issues du profil de chargement théorique et/ou du profil de chargement expérimental.

Bien que l'invention ne soit pas limitée au type de capteur (ou sonde) mis en œuvre, on pourra avantageusement prévoir une sonde radar. La technologie radar est en effet particulièrement adaptée aux atmosphères pulvérulentes.

L'invention n'est pas non plus limitée par le nombre de capteurs mis en œuvre. Avantageusement, on prévoira plusieurs capteurs, par exemple quatre capteurs, cinq capteurs, ou davantage.

Avantageusement et de façon non limitative, le procédé peut comprendre une étape consistant à comparer au moins une, par exemple chaque, valeur mesurée du paramètre représentatif de la hauteur du lit de chargement, à au moins une valeur précédente de ce paramètre, par exemple à au moins une valeur mesurée précédente de ce paramètre, et/ou au moins une valeur filtrée précédente de ce paramètre.

Avantageusement et de façon non limitative, le procédé peut comprendre pour au moins une, et par exemple pour chaque, valeur mesurée du paramètre représentatif de la hauteur, comparer cette valeur mesurée à au moins une valeur issue de la modélisation du profil de chargement. Par exemple, on pourra prévoir de comparer cette valeur à une valeur ou plusieurs valeurs du profil de chargement théorique, correspondant à l'instant courant, et/ou à des instants précédents. On pourra prévoir de comparer la valeur mesurée à au moins une valeur du profil de chargement expérimental, correspondant par exemple à l'instant courant et/ou à des instants précédents.

Avantageusement et de façon non limitative, on pourra prévoir une étape consistant à comparer au moins une, par exemple chaque, valeur mesurée reçue à au moins une valeur mesurée précédente, et d'ignorer la valeur mesurée courante s'il s'avère que les valeurs mesurées ont trop peu évolué pendant un laps de temps donné. Une telle situation de sonde figée est en effet susceptible de se produire et il est préférable que les valeurs correspondantes ne soient pas prises en considération.

On pourra prévoir de stocker en mémoire des seuils de tolérance pour ces comparaisons.

On pourra par exemple prévoir un premier seuil de tolérance pour la comparaison au profil de chargement expérimental.

Avantageusement et de façon non limitative, la valeur de ce premier seuil de tolérance peut être élaborée en fonction d'une vitesse de chargement théorique, elle-même obtenue à partir de la section de l'enceinte et du débit de particules solides, ou bien encore en fonction d'une vitesse de chargement expérimentale, obtenue à partir de valeurs filtrées précédentes. Par exemple, on pourra prévoir que ce premier seuil de tolérance soit choisi égal à deux fois la hauteur théorique chargée par minute.

On pourra prévoir un deuxième seuil de tolérance pour la comparaison au profil de chargement théorique.

Avantageusement et de façon non limitative, ce deuxième seuil de tolérance peut être fonction de la section de l'enceinte. Par exemple, on pourra prévoir que ce deuxième seuil de tolérance soit choisi égal à 10% du diamètre du réacteur.

Dans un mode de réalisation non limitatif, on pourra prévoir de ne comparer la valeur mesurée du paramètre représentatif de la hauteur à une ou des valeurs issu(es) d'un ou plusieurs profils de chargement, que si cette valeur mesurée diffère trop d'une valeur précédente du paramètre représentatif de la hauteur, par exemple une valeur mesurée précédente ou une valeur filtrée précédente.

Avantageusement et de façon non limitative, on pourra prévoir de disposer le ou au moins un des capteurs suffisamment loin des obstacles de type thermocouple, éventuellement présents dans l'enceinte, pour ne pas gêner la mesure. Les valeurs de hauteur mesurées peuvent en effet être non pertinentes du fait de la présence de ces obstacles. En disposant les capteurs suffisamment loin de ces obstacles, par exemple en ayant recours à une chaîne boutante ou autre, on peut limiter le nombre de points de mesure ne correspondant pas réellement à une hauteur du lit de chargement.

Avantageusement et de façon non limitative, au moins un capteur peut comprendre une sonde radar à antenne parabolique. Une telle sonde, relativement directive, peut permettre de mieux s'affranchir des obstacles de type thermocouple.

L'invention n'est donc bien entendu pas limitée à cette forme de réalisation. On pourra par exemple prévoir une antenne conique ou autre.

Avantageusement et de façon non limitative, on peut prévoir, préalablement au chargement, une étape consistant à recevoir, pour au moins un, par exemple chacun, des capteurs, une valeur mesurée du paramètre représentatif de la hauteur, et une étape consistant à déterminer pour au moins un, par exemple chacun, des capteurs une valeur de décalage (couramment « offset » en anglais) de hauteur.

Ainsi, on suppose qu'au début du chargement dense, la surface de l'enceinte est plane. Les valeurs de décalage sont ainsi calculées de sorte qu'à chacun des capteurs corresponde une même hauteur de chute.

L'invention n'est rien limitée à une façon particulière de mener les différentes comparaisons mentionnées ci-dessus.

Par exemple, on pourra prévoir de comparer une valeur A, par exemple une valeur mesurée du paramètre représentatif de la hauteur, à une valeur B, par exemple une valeur modélisée de ce paramètre, en :
- calculant une première valeur en fonction de ces valeurs A et B, par exemple une différence entre ces valeurs A et B, une valeur absolue de la différence entre ces valeurs A et B, un ratio entre ces valeurs A et B, ou autre, et en
- prenant des décisions différentes selon que cette première valeur est supérieure, ou bien encore supérieure ou égale, à un seuil, ou non.

Selon un autre exemple, on pourrait prévoir d'ajouter à la valeur B une valeur de seuil, et de prendre des décisions différentes selon que la valeur A est supérieure ou non à une telle somme.

Il est en outre proposé un produit programme d'ordinateur comprenant des instructions pour effectuer les étapes du procédé décrit ci-dessus lorsque ce programme est exécuté par un processeur. Ce programme peut par exemple être stocké sur un support, par exemple un disque dur, être téléchargé, ou autre.

Il est en outre proposé un dispositif de gestion du chargement en particules solides d'une enceinte, par exemple d'un réacteur, comprenant :
- une mémoire pour stocker une modélisation d'un profil de chargement attendu sur une durée de chargement,
- des moyens de réception pour recevoir d'au moins un capteur des valeurs mesurées d'un paramètre représentatif de la hauteur d'un lit de particules solides chargées dans l'enceinte,
- des moyens de traitement pour déterminer des valeurs filtrées du paramètre représentatif de la hauteur à partir des valeurs mesurées reçues, et à partir du profil de chargement modélisé et stocké en mémoire, et
- des moyens de transmission des valeurs filtrées du paramètre représentatif de la hauteur vers un moyen de pilotage du chargement en vue de l'élaboration d'un signal de contrôle du chargement.

Ce dispositif, peut comprendre des moyens de traitement numériques du signal. Ce dispositif de gestion du chargement peut par exemple comprendre ou être intégré dans un ou plusieurs processeurs, par exemple un microcontrôleur, un microprocesseur ou autre. Par exemple, ce dispositif peut comprendre un ordinateur, ou autre.

Les moyens de traitement peuvent par exemple comprendre ou être intégrés dans un cœur de processeur ou CPU (de l'anglais « Central Processing Unit »). Les moyens de réception peuvent comprendre un pin d'entrée, un port d'entrée ou autre, et les moyens de transmission peuvent comprendre un pin de sortie, un port de sortie ou autre.

Le dispositif peut comprendre ou être en communication avec des moyens d'affichage, par exemple un écran ou plus généralement avec une interface utilisateur d'ordinateur.

Le dispositif peut comprendre des moyens de traitement supplémentaires pour modéliser le profil de chargement qui sera ensuite stocké en mémoire.

La mémoire peut par exemple être une mémoire vive ou RAM (de l'anglais « Random Access memory »).

Le dispositif peut comprendre le moyen de pilotage, par exemple des moyens de traitement aptes à commander un dispositif de distribution en fonction des valeurs filtrées du paramètre représentatif de la hauteur, afin d'obtenir le chargement avec une densité la plus proche possible d'une valeur de densité souhaitée (densité cible), et ce, dans un temps le plus court possible.

Les différents moyens de traitement énoncés ci-dessus peuvent être intégrés dans une même puce, ou non.

Il est en outre proposé un système de chargement en particules solides d'une enceinte, notamment d'un réacteur, ce système comprenant un dispositif de distribution en particules solides, au moins un capteur pour mesurer un paramètre représentatif de la hauteur du lit de particules solides chargées dans l'enceinte, et un dispositif de gestion du chargement tel que décrit ci-dessus.

L'invention sera mieux comprise en référence aux figures, lesquelles illustrent des modes de réalisation non limitatifs.
La figure 1 montre un exemple de système de chargement de particules solides, selon un mode de réalisation de l'invention.
La figure 2 est un organigramme d'un exemple de procédé de gestion de chargement de particules solides selon un mode de réalisation de l'invention.
La figure 3A est un graphique montrant des valeurs de hauteur théoriques et des valeurs de hauteur mesurées, en fonction du temps, dans un exemple de réalisation de l'invention.
La figure 3B est un graphique montrant des valeurs de hauteur théoriques et des valeurs de hauteur filtrées, en fonction du temps, dans un exemple de réalisation de l'invention.

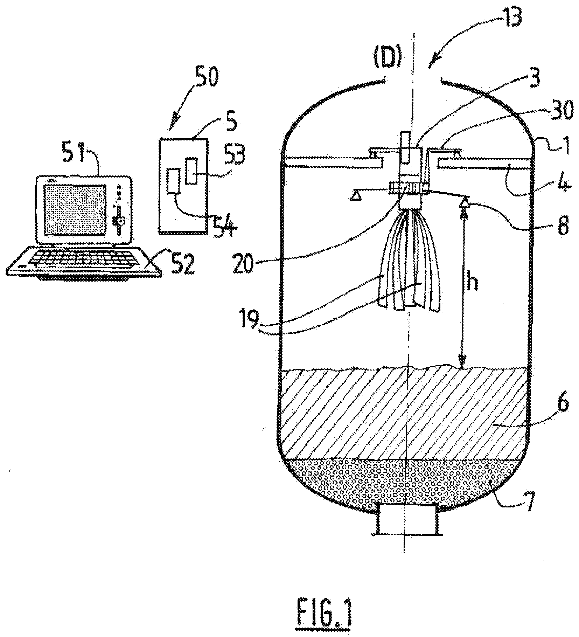

En référence à la figure 1, un réacteur 1 définit une ouverture 13, pour le passage d'un dispositif de distribution 3 de particules solides 6, 7. Le dispositif de distribution 3 peut par exemple être du type de celui décrit dans le document WO 2010/076522, ou bien encore du type de celui décrit dans la demande non publiée FR1255523 relatifs à d'autres inventions de la Demanderesse, ou autre.

Dans l'exemple représenté, le dispositif de distribution 3 repose sur un plateau 4 du réacteur 1, grâce à des bras 30 montés sur une couronne 20 de façon à pouvoir être déplacés sur la circonférence de cette couronne 20. Le dispositif 3 comporte en outre des lanières souples 19 pour mieux répartir les particules solides.

Ce réacteur 1 mesure environ 5 ou 6 mètres de hauteur ou plus selon les cas et sa base a un diamètre de l'ordre de 3, 4, 5 mètres ou plus selon les cas.

Le dispositif de distribution 3 permet le chargement du réacteur 1 en billes inertes 6, et également en particules de catalyseur 7.

Ce type de réacteur 1 peut notamment être utilisé dans l'industrie pétrochimique. Il peut par exemple s'agir d'un réacteur pétrochimique dans lequel une charge d'hydrocarbures s'écoule à travers le lit de catalyseur 7 et le lit de billes inertes 6. Les particules solides de catalyseur peuvent être des particules extrudées poreuses comprenant usuellement des composés métalliques.

Une fois les lits catalytiques 6, 7 chargés, on retire le dispositif de distribution 3 et un flux d'hydrocarbures qui peut être liquide et/ou gazeux, s'écoule à travers ce réacteur 1.

Les lits catalytiques 6, 7 doivent être remplacés régulièrement, par exemple tous les ans, tous les deux ans voire moins souvent selon les cas, lorsque l'activité du catalyseur n'est plus suffisante pour assurer un bon fonctionnement de l'unité dans lequel il est utilisé ; ce catalyseur peut être définitivement recyclé pour la récupération éventuelle des métaux rares, ou bien encore régénéré puis rechargé dans l'unité. Pour des raisons de coûts et de productivité, on cherche à limiter autant que faire ce peut le temps de préparation du réacteur 1.

Lors du chargement des particules solides 6, 7, des capteurs 8 sont installés dans le réacteur 1 afin de surveiller le déroulement du chargement des produits chargés dans le réacteur.

Par produits chargés dans le réacteur, ou chargement du réacteur, on entend les particules solides distribuées dans le réacteur par le dispositif de distribution, par exemple les lits 6, 7, de la figure 1, les réactifs et produits au sens chimique du terme, et/ou autre.

Les capteurs 8 peuvent par exemple comprendre des capteurs laser, des caméras, des radars, des capteurs ultrasonores et/ou autres.

On pourra avantageusement choisir des capteurs de type radar.

Chaque capteur 8 peut par exemple être une sonde de mesure haute d'environ 30 centimètres et pesant près de 2 kilogrammes ou plus selon les cas.

Même si sur la figure 1, seulement deux capteurs 8 sont représentés à des fins de lisibilité, on placera avantageusement quatre ou cinq capteurs. Par exemple, un capteur radar (non représenté) peut être disposé à une position relativement centrale, proche de l'axe de symétrie (D) du réacteur 1, tandis que les trois ou quatre autres capteurs peuvent être disposés à des positions périphériques, relativement éloignées de cet axe (D).

Les capteurs 8 peuvent par exemple permettre de mesurer le niveau du lit catalytique 6, en mesurant en pratique la distance au niveau du lit, et de détecter des éventuelles variations de niveau. Si la surface de remplissage présente un relief, on peut prévoir de commander la distribution des particules solides de façon à remédier à ce relief, par exemple en conférant aux particules à charger davantage de vitesse, de sorte que les particules viennent remplir les creux latéraux.

Un système de chargement 13 comprend ainsi, outre le dispositif de distribution 3, un ordinateur 50, par exemple de type portable ou non. Bien entendu, l'invention n'est pas limitée à une forme particulière d'ordinateur : on pourrait prévoir un téléphone intelligent (« smartphone » en anglais), une tablette, ou autre.

Cet ordinateur 50 est en communication avec chacun des capteurs 8, et avec un dispositif de commande (non représenté) du dispositif de distribution 3, via des moyens filaires ou sans fil, par exemple du type Bluetooth® ou autre. Dans le cas de moyens filaires, des raccordements électriques peuvent permettre de connecter chacun de capteurs à un boitier extérieur, afin que les signaux issus de ces capteurs puissent être lus et traités. On pourra par exemple mettre en œuvre des fils électriques et des moyens de clipsage de ces fils électriques sur le dispositif de chargement, notamment le long d'au moins une partie de la chaîne boutante, ou tout autre moyen à la portée de l'homme du métier.

L'ordinateur 50 comprend un dispositif de gestion classique à microprocesseurs, par exemple une unité centrale 5. Selon un autre exemple, le dispositif de gestion pourrait comprendre un module de filtrage d'un logiciel de profilométrie exécuté par le processeur d'un ordinateur.

Ce dispositif de gestion permet de filtrer les valeurs mesurées aberrantes, et donc de limiter les erreurs d'interprétation quant aux profils de chargement réels, et ce tout en permettant de détecter les éventuels défauts de chargement réels.

Un processeur 53 permet de calculer à partir d'une valeur de débit et d'au moins une valeur d'aire de la section du réacteur 1, un profil de chargement théorique sur une durée de chargement donnée, par exemple du début du chargement (t=0) jusqu'à un instant correspondant à une hauteur finale souhaitée. Pour un réacteur cylindrique chargé avec un débit constant, ce profil de chargement prend la forme d'une droite, car on s'attend à ce que la hauteur du lit 6 croisse de façon linéaire avec le temps.

Des données permettant de reconstituer cette courbe théorique, par exemple les coordonnées d'un point et un coefficient directeur, sont stockées dans une mémoire 54.

Au cours du chargement, le processeur 53 reçoit, pour chacun des capteurs 8, des valeurs mesurées de la distance h séparant ce capteur 8 de la surface du lit catalytique 6.

Ces valeurs mesurées sont comparées aux valeurs théoriques modélisées issues des données stockées dans la mémoire 54, afin d'écarter les éventuelles valeurs mesurées non pertinentes.

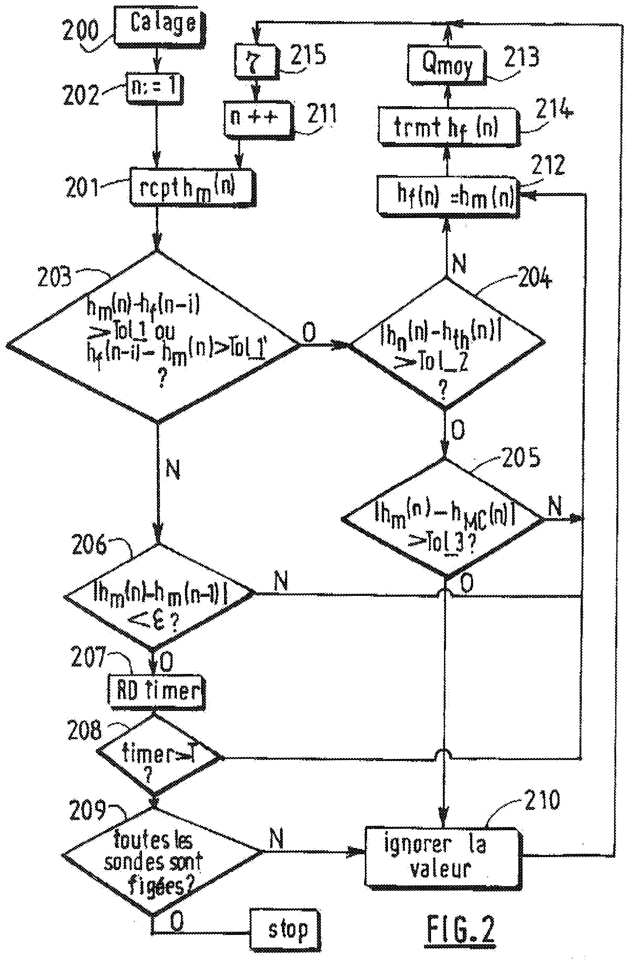

Le procédé mis en œuvre dans ce dispositif de gestion 5 sera décrit plus en détail en référence à la figure 2.

Le dispositif de gestion 5 détermine ainsi des valeurs de hauteur h filtrées, en utilisant un profil de chargement modélisé.

Au cours du chargement, les quatre ou cinq valeurs filtrées de hauteur correspondant à un instant t et aux quatre ou cinq capteurs respectifs 8, sont comparées entre elles.

Si à un instant t au cours du chargement, ces quatre ou cinq valeurs filtrées de hauteur sont suffisamment proches les unes des autres, le lit catalytique est considéré comme plan.

A contrario, si une ou plusieurs valeurs de hauteur filtrées diffèrent trop de la ou des autres, alors on considère que la surface du lit catalytique présente un ou des reliefs.

Prévoir un nombre relativement élevé de capteurs, par exemple quatre ou cinq, peut permettre d'estimer la forme de ces reliefs à partir des valeurs de hauteur filtrées et issues de ces capteurs. Par exemple si la valeur de hauteur h correspondant au capteur disposé sur l'axe (D) est la plus élevée des quatre ou cinq valeurs de hauteur, alors il est possible que la surface du lit catalytique ait une forme de cuvette.

Si un relief est ainsi détecté, alors le processeur 53 élabore un signal de contrôle destiné au dispositif de commande. En réponse à ce signal de contrôle, le dispositif de commande :
- modifie la taille d'ouvertures du dispositif de distribution 3, par exemple les dimensions de fenêtres ajustables du fût d'alimentation d'un dispositif de chargement du type de celui du document EP2231318, pour changer le débit de particules solides,
- adapte la vitesse de rotation autour de l'axe (D) d'une partie de chargement du dispositif de distribution 3, et/ou
- autre.

On peut prévoir de déterminer la commande de la taille des ouvertures de distribution à partir d'une valeur de débit souhaité en ayant recours à une cartographie. Par exemple, on stocke dans une mémoire un tableau à deux colonnes de sorte qu'à chaque valeur de débit corresponde une valeur de taille d'ouvertures. Alternativement, on pourrait prévoir de calculer une valeur de taille d'ouverture en fonction de la valeur de débit souhaité.

Inversement, on peut prévoir de calculer un débit courant à partir d'un signal de commande de la taille des ouvertures, en utilisant une cartographie, par exemple de type abaques, ou autre.

En cas de changement de débit, le profil de chargement théorique est mis à jour : par exemple, on calcule un nouveau coefficient directeur. La courbe de chargement théorique peut ainsi comprendre plusieurs segments de droite, tout en restant continue.

Le procédé mis en œuvre par le dispositif de gestion 5 est maintenant explicité avec davantage de détails.

Préalablement au chargement dense de la couche 6, les capteurs 8 sont placés sous le plateau 4 à des hauteurs variables. L'ordinateur 5 reçoit quatre valeurs mesurées de hauteur issues respectivement des quatre capteurs 8. La couche 7 étant supposée plane à quelques centimètres près, une valeur de décalage est calculée pour chacune des sondes de sorte que, pour chacune des sondes, la valeur mesurée à laquelle on aura retranché la valeur de décalage correspondante soit égale à une valeur de hauteur supposée. Cette valeur de hauteur supposée peut avoir été mesurée préalablement, être conservée en mémoire, ou autre.

Toutefois, s'il existe entre deux valeurs mesurées de hauteur, issues de deux capteurs distincts placés sous le plateau, une différence supérieure à un seuil, par exemple 20 centimètres, ou s'il existe entre la valeur issue du capteur placé sur l'axe (D) et une valeur issue d'un des capteurs placés sous le plateau une différence supérieure à un autre seuil, par exemple 40 centimètres, alors l'écran affiche un message invitant l'opérateur à repositionner les capteurs. De trop grandes variations de hauteur dans les positions des sondes risquent en effet de conduire à des valeurs aberrantes.

Si, malgré le repositionnement, l'une des sondes renvoie malgré tout une valeur jugée aberrante, c'est à dire correspondant à une différence de plus de 20 ou 40 centimètres par rapport aux valeurs issues des autres capteurs, alors le dispositif de gestion peut décider de ne plus prendre en considération les valeurs issues de ladite sonde, par exemple en plaçant un drapeau correspondant à cette sonde à un.

Ces différents traitements effectués préalablement au chargement sont représentés par l'étape de calage 200 de la figure 2.

Puis le chargement démarre. Le module de filtrage est programmé pour effectuer alors un certain nombre de boucles, chaque boucle, indicée n, correspondant à un échantillon temporel. L'organigramme comprend une étape 202 d'initialisation de cet indice n.

Au cours de cette étape 202, on affecte en outre à chacune des variables de hauteur décrites ci-dessous une valeur initiale hₘ(0), h_{f}(0), h_{MC}(0), etc. égale à une hauteur de chute prédéterminée ou déterminée lors du calage.

Dans la présente demande, les indices m, f, th et MC ont été utilisés pour désigner en général des valeurs respectivement mesurées, filtrées, théoriques et résultant d'une régression par la méthode des moindres carrés

Lors de l'exécution d'une nième boucle, pour chacune des sondes, une valeur mesurée de la hauteur hₘ(n) est reçue, lors d'une étape 201.

Pour plus de lisibilité, sur la figure 2, les noms des différents paramètres de hauteur hₘ(n), h_{f}(n), h_{MC}(n), etc. ne portent pas de référence à leur sonde d'origine, mais on comprendra que ces différentes étapes sont effectuées pour chacune des sondes.

Au cours d'une étape de test 203, la valeur mesurée courante hₘ(n) est comparée à la dernière valeur filtrée retenue hf(n-i). Si lors de l'exécution de la boucle précédente, la valeur mesurée a été retenue, alors i=1. Si depuis p cycles, aucune valeur mesurée n'est retenue, alors i=p+1.

Lors de ce test 203, on vérifie tout d'abord que la valeur mesurée hₘ(n) n'est pas plus grande que la dernière valeur retenue. On s'attend en effet à ce que les valeurs de hauteur décroissent avec le temps, la hauteur étant ici la distance entre la sonde et le lit de particules chargées. Une tolérance Tol_1 est toutefois fixée, car les valeurs issues de sondes peuvent parfois osciller légèrement. Les oscillations dépassant rarement 10 centimètres, on pourra choisir une valeur de tolérance Tol_1 de 15 centimètres par exemple.

Alternativement, cette valeur Tol_1 peut être définie en fonction de la vitesse de chargement. Par exemple, pour un réacteur chargé à 5 centimètres par minute, Tol_1 pourra être égal à 10 centimètres.

En outre, on vérifie que la valeur mesurée hₘ(n) n'est pas trop inférieure à la valeur retenue précédente hf(n-i). On pourra par exemple choisir une valeur de tolérance Tol_1' de 15 centimètres ou de 20 centimètres par exemple.

Les valeurs Tol_1, Tol_1' peuvent être égales entre elles, ou non.

Le procédé comprend en outre une étape de test 204, au cours de laquelle la valeur mesurée hₘ(n) est comparée à une valeur théorique hₜₕ(n) issue d'une modélisation. Cette valeur théorique peut par exemple être calculée à partir de la valeur de l'échantillon temporel n, des coordonnées d'un point et d'une valeur de coefficient directeur stockées dans la mémoire 54.

Sur la figure 2, les étapes de détermination de cette valeur théorique de coefficient directeur, de stockage de cette valeur, de calcul de la valeur théorique hₜₕ(n) ne sont pas représentées. Ces étapes de modélisation d'un profil de chargement théorique peuvent par exemple intervenir préalablement au chargement, de sorte que lors de l'exécution du test 204, on lit dans un tableau la valeur hₜₕ(n) courante.

On pourra pour ce test 204 choisir une valeur Tol_2 égale à 10% du diamètre du réacteur, par exemple 30 centimètres.

Le procédé comprend en outre une étape de test 205, au cours de laquelle la valeur mesurée hₘ(n) est comparée à une valeur expérimentale h_{MC}(n) déterminée à partir des valeurs filtrées hf précédentes. Le procédé peut en effet déterminer une courbe expérimentale, par exemple en déterminant une valeur de pente Q_{moy} à partir des valeurs filtrées à des instants précédents, par exemple en mettant en œuvre une méthode de type moindres carrés, puis estimer une valeur expérimentale hₘ(n) correspondant à l'échantillon courant n pour la courbe ayant un coefficient directeur Q_{moy} et un point initial déterminé.

On pourra choisir pour cette étape de test 205 une valeur de tolérance Tol_3 par exemple égale à la valeur Tol_1.

Cette étape de test 205 peut notamment permettre d'éviter d'éliminer des valeurs trop éloignées de la valeur retenue précédente hf(n-i) et trop éloignées de la valeur théorique hₜₕ(n). En effet, si le débit réel est relativement éloigné du débit théorique, il peut être délicat de retrouver des valeurs cohérentes lorsque la sonde a renvoyé des valeurs fixes ou trop faibles pendant une certaine durée. Du catalyseur a continué à être chargé pendant cette durée, et les valeurs de tolérance Tol_1, Tol_1' et/ou Tol_2 peuvent s'avérer alors trop faibles pour permettre d'accepter de retenir des valeurs pourtant correctes. Les comparaisons de l'étape 205, menées par rapport à une valeur issue d'un calage à partir des valeurs retenues précédentes, peuvent ainsi permettre d'éviter de perdre des données mesurées pertinentes.

Dans un autre mode de réalisation, non représenté, on pourrait prévoir d'augmenter les seuils de tolérance Tol_1, etc. si aucune valeur n'est retenue pendant plusieurs cycles, et de les ramener à leur valeur initiale lorsqu'une valeur est retenue.

Le procédé comprend en outre une étape de test 206, au cours de laquelle la valeur mesurée hₘ(n) est comparée à une valeur mesurée précédente hₘ(n-1). Si ces valeurs sont trop proches, alors on considère qu'il y a un risque que la sonde correspondante soit figée.

On prévoit un compteur déclenché à la première détection de ce que les valeurs hₘ(n), hₘ(n-1) sont trop proches, et remis à zéro chaque fois qu'un cycle se déroule sans cette détection.

Après une étape 207 de lecture de ce compteur, on compare au cours d'une étape 208 la valeur lue, ici nommée timer, à un seuil T, par exemple 1 minute.

S'il s'avère que la sonde produit des valeurs proches les unes des autres depuis plus d'une minute, alors on regarde la situation des autres sondes, au cours d'une étape 209. Cette étape 209 pourra par exemple mettre en œuvre pour chaque sonde un drapeau indiquant que cette sonde est figée.

Si toutes les sondes sont figées, il est mis fin à l'acquisition, et le module de filtrage sort de la boucle. Dans le cas contraire, la valeur mesurée courante hₘ(n) n'est pas retenue (étape 210), et le dispositif se prépare à l'exécution d'une boucle suivante.

Par exemple, le dispositif se place dans un état d'attente pendant une durée prédéterminée, par exemple 10 millisecondes (étape 215), puis l'indice n est incrémenté au cours d'une étape 211.

Pour revenir au test 206, dans le mode de réalisation représenté, ce test 206 n'est exécuté que si le test 203 est négatif.

S'il s'avère à l'issu des tests 206, 208 que la sonde n'est pas figée ou est figée depuis moins d'une minute, et que la valeur mesurée courante hₘ(n) est suffisamment proche de la dernière valeur retenue hf(n-i), alors la valeur courante hₘ(n) est retenue au cours d'une étape 212.

Dans le mode de réalisation représenté, les tests 204, 205 ne sont exécutés que si le test 203 est positif, c'est-à-dire si la valeur mesurée courante hₘ(n) est trop éloignée de la dernière valeur retenue h_{f}(n-i). Plus précisément, le test 205 mettant en œuvre la valeur expérimentale h_{MC}(n) est effectué seulement si le test 204 mettant en œuvre la valeur théorique hₜₕ(n) est positif.

Si le test 204 ou le test 205 est négatif, alors la valeur courante hₘ(n) est retenue au cours de l'étape 212.

A contrario, si ces deux tests 204, 205, sont positifs, alors la valeur mesurée courante hₘ(n) est ignorée au cours de l'étape 210.

L'invention n'est en rien limitée par cette articulation des différents tests 203, 204, 205, 206, ni bien sûr par la forme de ces tests.

En particulier, les étapes 204, 205 de comparaison à des valeurs modélisées hₜₕ(n), h_{MC}(n) pourraient être effectuées systématiquement, pour chacun des échantillons, par exemple avant ou parallèlement à l'exécution du test consistant à comparer la valeur mesurée reçue à une valeur mesurée précédente (par exemple la dernière valeur retenue).

Pour revenir à la figure 2, lorsqu'une valeur est retenue, le processeur met à jour la valeur du coefficient directeur Q_{moy}, au cours d'une étape de modélisation 213. On pourra avoir recours à une méthode des moindres carrés, en se basant sur la totalité des valeurs précédemment retenues, ou sur les R dernières valeurs retenues. R peut par exemple être égal à 10 ou 100 selon le pas d'échantillonnage.

En outre, chaque valeur retenue h_{f}(n) est transmise au cours d'une étape 214 afin d'être affichée sur un écran de l'ordinateur, par exemple de façon à former avec les autres valeurs filtrées une courbe de chargement. Les valeurs filtrées peuvent en outre servir à piloter le chargement, comme expliqué en référence à la figure 1.

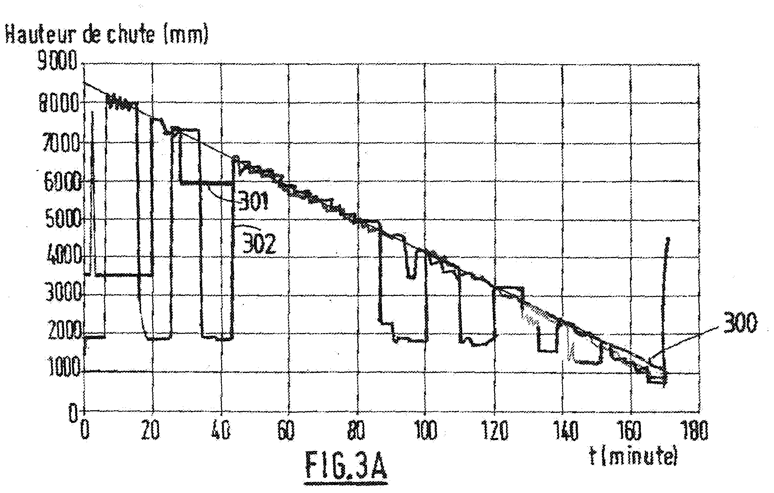

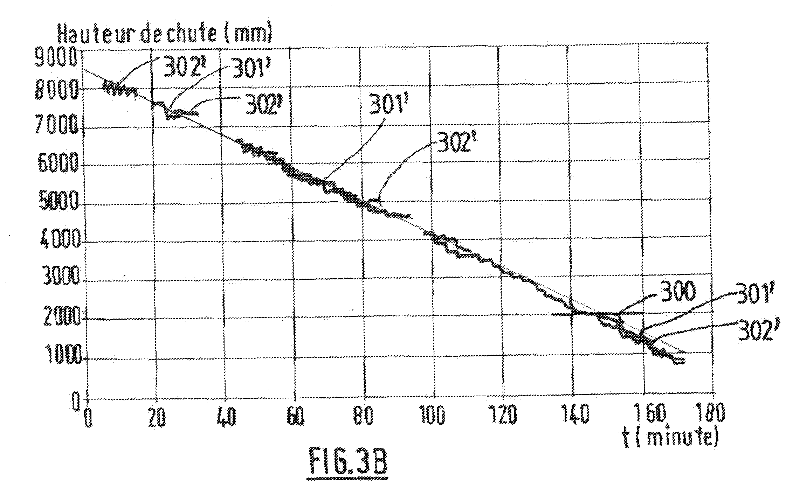

Les figures 3A et 3B sont des graphiques avec en ordonnée des valeurs de hauteur, en millimètres, et en abscisse des valeurs de temps, en minutes. L'instant t=0 correspond au début du chargement.

Une courbe théorique 300 a été obtenue à partir d'une valeur de débit attendue et à partir d'une valeur de diamètre du réacteur, ici supposé cylindrique de section circulaire. Cette courbe est donc une droite.

En référence à la figure 3A, deux courbes de mesures 301, 302 sont obtenues à partir des valeurs issues de deux capteurs respectifs et des instants de mesure correspondant. Pour des raisons de lisibilité, on a limité le nombre de ces courbes de mesure à deux, mais on comprendra qu'en pratique le nombre de courbes à filtrer peut être plus élevé, par exemple quatre ou cinq.

Comme on peut le voir, ces courbes présentent de nombreux décrochements, au cours desquels les valeurs mesurées peuvent être bien inférieures aux valeurs attendues. On peut présumer que ces décrochements sont causés par le fait que la valeur de distance est calculée à partir du signal correspondant à la réflexion par un obstacle, et non par le lit de catalyseur.

Ces détections d'échos parasites peuvent survenir d'autant plus souvent que l'intérieur du réacteur est peu limpide.

La figure 3B montre, outre la courbe théorique 300, deux courbes filtrées 301', 302' obtenues à partir des valeurs retenues à l'étape 212 de la figure 2, et des instants de mesure correspondants. Comme on peut le constater, aucun décrochement ne subsiste et les courbes filtrées sont relativement proches de la courbe théorique 300.

Ces courbes filtrées peuvent être discontinues, notamment aux instants correspondant à des décrochements.

Dans un mode de réalisation non représenté, on pourra prévoir d'estimer les valeurs manquantes par interpolation, à partir des valeurs filtrées.

## Revendications

1. Procédé de gestion du chargement dense en particules solides d'une enceinte, comprenant :
stocker dans une mémoire une modélisation d'un profil de chargement attendu sur une durée de chargement,
au cours du chargement, recevoir (201) d'au moins un capteur des valeurs mesurées d'un paramètre représentatif de la hauteur d'un lit de particules solides chargées dans l'enceinte (hₘ(n)),
déterminer (204, 205, 210, 212) des valeurs filtrées du paramètre représentatif de la hauteur (h_{f}(n)) à partir des valeurs mesurées reçues et à partir du profil de chargement modélisé, et
transmettre (214) les valeurs filtrées à un moyen de pilotage du chargement en vue d'une élaboration en fonction desdites valeurs filtrées d'un signal de contrôle du chargement en particules solides.

2. Procédé selon la revendication 1, dans lequel
on stocke un profil de chargement théorique, modélisé en fonction de la forme de l'enceinte, du débit de particules solides et du type de particules solides chargées, et dans lequel
on détermine les valeurs filtrées du paramètre représentatif de la hauteur (h_{f}(n)) en comparant (204) des valeurs mesurées reçues (hₘ(n)) à des valeurs issues du profil de chargement théorique (hₜₕ(n)).

3. Procédé selon l'une des revendications 1 ou 2, dans lequel
on stocke un profil de chargement expérimental modélisé (213) à partir de valeurs filtrées du paramètre représentatif de la hauteur déterminée à des instants précédents,
on détermine les valeurs filtrées du paramètre représentatif de la hauteur (h_{f}(n)) en comparant (205) des valeurs mesurées reçues (hₘ(n)) à des valeurs issues du profil de chargement expérimental (h_{MC}(n)).

4. Procédé selon l'une des revendications 1 à 3, comprenant en outre une étape consistant à comparer (203) au moins une valeur mesurée du paramètre représentatif de la hauteur (hₘ(n)) du lit de chargement à au moins une valeur précédente dudit paramètre (h_{f}(n-i)).

5. Procédé selon l'une des revendications 1 à 4, comprenant, pour au moins une valeur mesurée reçue,
une étape de comparaison (206) de ladite valeur mesurée reçue (hₘ(n)) à au moins une valeur mesurée précédente (hₘ(n-1)),
et dans lequel on ignore ladite valeur mesurée reçue s'il s'avère que les valeurs mesurées reçues ont trop peu évolué pendant un laps de temps (T) donné.

6. Procédé selon l'une des revendications 1 à 5,
dans lequel on prévoit une pluralité de capteurs, chaque capteur permettant de mesurer une valeur mesurée du paramètre représentatif de la hauteur,
et comprenant, préalablement au chargement :
recevoir une pluralité de valeurs mesurées du paramètre représentatif de la hauteur issues de la pluralité de capteurs respectifs,
déterminer pour au moins un capteur une valeur de décalage à affecter aux valeurs issues dudit capteur pour que la pluralité de valeurs corrigées soient égales.

7. Produit programme d'ordinateur comprenant des instructions pour effectuer les étapes du procédé selon l'une quelconque des revendications 1 à 6 lorsque ledit programme est exécuté par un processeur d'ordinateur.

8. Dispositif de gestion (5) du chargement en particules solides d'une enceinte comprenant :
une mémoire pour stocker un profil de chargement attendu modélisé sur une durée de chargement,
des moyens de réception pour recevoir d'au moins un capteur des valeurs mesurées d'un paramètre représentatif de la hauteur d'un lit de particules solides chargées dans l'enceinte,
des moyens de traitement pour déterminer des valeurs filtrées du paramètre représentatif de la hauteur à partir des valeurs mesurées reçues, et à partir du profil de chargement modélisé stocké, et
des moyens de transmission des valeurs filtrées du paramètre représentatif de la hauteur à un moyen de pilotage du chargement en vue d'une élaboration d'un signal de contrôle du chargement en particules solides.

9. Système de chargement (13) en particules solides d'une enceinte (1), comprenant
un dispositif de distribution en particules solides (3),
au moins un capteur (8) pour mesurer un paramètre représentatif de la hauteur du lit de particules solides chargées dans l'enceinte, et
un dispositif de gestion du chargement (5) selon la revendication 8.

10. Système de chargement selon la revendication 9, dans lequel ledit au moins un capteur comprend au moins une sonde radar (8).

11. Système de chargement selon l'une des revendications 9 ou 10, comprenant une pluralité de capteurs.

## Patentansprüche

1. Verfahren zum Verwalten des dichten Ladens mit festen Teilchen aus einem Gehäuse, umfassend:
Speichern einer Modellierung eines erwarteten Ladeprofils über eine Ladedauer in einem Speicher,
während des Ladens Empfangen (201) der Messwerte eines Parameters, der für die Höhe eines Bettes fester Teilchen repräsentativ ist, die in das Gehäuse (hₘ(n)) geladen sind, von mindestens einem Sensor,
Bestimmen (204, 205, 210, 212) der gefilterten Werte des für die Höhe repräsentativen Parameters (h_{f}(n)) aus den empfangenen Messwerten und aus dem modellierten Ladeprofil, und
Übertragen (214) der gefilterten Werte an eine Einrichtung zum Steuern des Ladens, um in Abhängigkeit von den genannten gefilterten Werten ein Signal zum Steuern des Ladens fester Teilchen zu erzeugen.

2. Verfahren nach Anspruch 1, wobei
ein theoretisches Ladeprofil gespeichert wird, das in Abhängigkeit von der Form des Gehäuses, der Rate fester Teilchen und der Art der geladenen festen Teilchen modelliert wird, und wobei
die gefilterten Werte des für die Höhe repräsentativen Parameters (h_{f}(n)) durch Vergleichen (204) der erhaltenen Messwerte (hₘ(n)) mit Werten aus dem theoretischen Ladeprofil (hₜₕ(n)) bestimmt werden.

3. Verfahren nach einem der Ansprüche 1 oder 2, wobei
ein modelliertes experimentelles Ladeprofil (213) aus gefilterten Werten des Parameters gespeichert wird, der für die zu früheren Zeiten bestimmte Höhe repräsentativ ist,
die gefilterten Werte des für die Höhe repräsentativen Parameters (h_{f}(n)) durch Vergleichen (205) der erhaltenen Messwerte (hₘ(n)) mit Werten aus dem experimentellen Ladeprofil (h_{MC}(n)) bestimmt werden.

4. Verfahren nach einem der Ansprüche 1 bis 3, ferner umfassend einen Schritt, der darin besteht, mindestens einen Messwert des Parameters, der für die Höhe (hₘ(n)) des Ladebettes repräsentativ ist, mit mindestens einem vorherigen Wert des genannten Parameters (h_{f}(n-i)) zu vergleichen (203).

5. Verfahren nach einem der Ansprüche 1 bis 4, umfassend für mindestens einen empfangenen Messwert,
einen Schritt des Vergleichens (206) des genannten empfangenen Messwerts (hₘ(n)) mit mindestens einem vorherigen Messwert (hₘ(n-1)),
und wobei der genannte empfangene Messwert ignoriert wird, wenn sich herausstellt, dass sich die empfangenen Messwerte während eines bestimmten Zeitraums (T) zu wenig geändert haben.

6. Verfahren nach einem der Ansprüche 1 bis 5,
wobei eine Mehrzahl von Sensoren vorgesehen ist, wobei es jeder Sensor ermöglicht, einen Messwert des Parameters zu messen, der für die Höhe repräsentativ ist,
und umfassend, vor dem Laden:
Empfangen einer Mehrzahl von Messwerten des für die Höhe repräsentativen Parameters aus der Mehrzahl der jeweiligen Sensoren,
Bestimmen eines Versatzwerts, der den Werten von dem genannten Sensor zugewiesen werden soll, für mindestens einen Sensor, damit die Mehrzahl der korrigierten Werte gleich ist.

7. Computerprogrammprodukt, umfassend Anweisungen zum Ausführen der Schritte des Verfahrens nach einem der Ansprüche 1 bis 6, wenn das genannte Programm von einem Computerprozessor ausgeführt wird.

8. Verwaltungsvorrichtung (5) zum Laden fester Teilchen in ein Gehäuse, umfassend:
einen Speicher zum Speichern eines erwarteten Ladeprofils, das über eine Ladedauer modelliert wurde,
Empfangseinrichtungen zum Empfangen von Messwerten eines Parameters, der für die Höhe eines Bettes geladener fester Teilchen in dem Gehäuse repräsentativ ist, von mindestens einem Sensor,
Verarbeitungseinrichtungen zum Bestimmen gefilterter Werte des Parameters, der für die Höhe repräsentativ ist, aus den empfangenen Messwerten und aus dem gespeicherten modellierten Ladeprofil, und
Einrichtungen zum Übertragen der gefilterten Werte des für die Höhe repräsentativen Parameters an eine Einrichtung zum Steuern des Ladens, um ein Signal zum Steuern des Ladens fester Teilchen zu erzeugen.

9. Ladesystem (13) für feste Teilchen eines Gehäuses (1), umfassend
eine Vorrichtung zum Verteilen fester Teilchen (3),
mindestens einen Sensor (8) zum Messen eines Parameters, der für die Höhe des Bettes geladener fester Teilchen im Gehäuse repräsentativ ist, und
eine Ladeverwaltungsvorrichtung (5) nach Anspruch 8.

10. Ladesystem nach Anspruch 9, wobei der genannte mindestens eine Sensor mindestens eine Radarsonde (8) umfasst.

11. Ladesystem nach einem der Ansprüche 9 oder 10, umfassend eine Mehrzahl von Sensoren.

## Claims

1. A method for managing the dense charging of an enclosure with solid particles, which comprises:
storing in a memory a model of an expected charging profile over a charging time,
during charging, receiving (201) from at least one sensor measured values of a parameter representative of the height of a bed of solid particles charged into the enclosure (hₘ(n)),
determining (204, 205, 210, 212) filtered values of the parameter representative of the height (h_{f}(n)) from the received measured values and from the modelled charging profile, and
transmitting (214) the filtered values to a means for controlling the charging with a view to producing, as a function of said filtered values, a signal for controlling the charging with solid particles.

2. The method according to claim 1, wherein
a theoretical charging profile, modelled as a function of the shape of the enclosure, of the flow rate of solid particles and of the type of solid particles charged, is stored, and wherein
the filtered values of the parameter representative of the height (h_{f}(n)) are determined by comparing (204) the received measured values (hₘ(n)) with values from the theoretical charging profile (hₜₕ(n)).

3. The method according to either claim 1 or claim 2, wherein
an experimental charging profile (213), modelled from filtered values of the parameter representative of the height determined at previous times, is stored,
the filtered values of the parameter representative of the height (h_{f}(n)) are determined by comparing (205) the received measured values (hₘ(n)) with values from the experimental charging profile (h_{MC}(n)).

4. The method according to one of claims 1 to 3, further comprising a step that consists of comparing (203) at least one measured value of the parameter representative of the height (hₘ(n)) of the charging bed with at least one previous value of said parameter (h_{f}(n-i)).

5. The method according to one of claims 1 to 4, comprising, for at least one received measured value,
a step of comparing (206) said received measured value (hₘ(n)) with at least one previous measured value (hₘ(n-1)),
and wherein said received measured value is ignored if the received measured values are found to have changed too little over a given period of time (T).

6. The method according to one of claims 1 to 5,
wherein a plurality of sensors is provided, each sensor making it possible to measure a measured value of the parameter representative of the height,
and comprising, before charging:
receiving a plurality of measured values of the parameter representative of the height from the plurality of respective sensors,
determining for at least one sensor an offset value to be assigned to the values from said sensor so that the plurality of corrected values are equal.

7. A computer program product comprising instructions for carrying out the steps of the method according to any one of claims 1 to 6 when said program is executed by a computer processor.

8. A device for managing (5) the charging of an enclosure with solid particles comprising:
a memory for storing an expected charging profile modelled over a charging time,
receiving means for receiving from at least one sensor measured values of a parameter representative of the height of a bed of solid particles charged into the enclosure,
processing means for determining filtered values of the parameter representative of the height from the received measured values, and from the stored modelled charging profile, and
means for transmitting the filtered values of the parameter representative of the height to a means for controlling the charging with a view to producing a signal for controlling the charging with solid particles.

9. A system for charging (13) an enclosure (1) with solid particles, comprising
a device for distributing solid particles (3),
at least one sensor (8) for measuring a parameter representative of the height of the bed of solid particles charged into the enclosure, and
a device for managing the charging (5) according to claim 8.

10. The charging system according to claim 9, wherein said at least one sensor comprises at least one radar probe (8).

11. The charging system according to either claim 9 or claim 10, comprising a plurality of sensors.
